# EUROPÄISCHE PATENTSCHRIFT

(11) **EP 2 018 999 B1**
(45) Veröffentlichungstag und Bekanntmachung des Hinweises auf die Patenterteilung: **12.11.2014**
(21) Anmeldenummer: 08159409.5
(22) Anmeldetag: 01.07.2008
(51) Int. Cl.: B60R 21/04, B60J 5/04, F16F 7/12

(54) **Energieabsorber zur Verwendung als Aufprallschutz in einem Kraftfahrzeug**
Energy absorber for use as collision protection in a motor vehicle
Absorbeur d'énergie destiné à servir de protection contre les chocs dans un véhicule automobile

(30) Priorität: 24.07.2007 DE 102007034313; 29.11.2007 DE 202007016671 U
(43) Veröffentlichungstag der Anmeldung: 28.01.2009
(73) Patentinhaber: Lisa Dräxlmaier GmbH, 84137 Vilsbiburg (DE)
(72) Erfinder: Asenkerschbaumer, Dominik, 84524 Neuötting (DE); Unterreiner, Klaus, 84144 Geisenhausen (DE); Sperl, Thomas, 94405 Landau a. d. Isar (DE)

(56) Entgegenhaltungen:
- EP-A- 0 787 611
- EP-A- 1 510 385
- EP-A1- 1 593 872
- WO-A1-2005/113275
- US-A- 5 573 272
- US-A- 5 636 866
- US-A- 5 934 730
- US-A- 6 050 631
- US-A1- 2007 090 666
- US-B1- 6 203 096

## Beschreibung

Die vorliegende Erfindung betrifft ein Kraftfahrzeug mit einem Energieabsorber als Aufprallschutz im Bereich der Türen.

Ein derartiger Aufprallschutz dient primär dazu Fahrzeuginsassen bei einem Unfall (Aufprall) vor schwerwiegenden Verletzungen zu schützen. Der Energieabsorber der vorliegenden Erfindung dient jedoch nicht primär dazu, Energie die beim Aufprall zwischen dem Kraftfahrzeug und einem entsprechenden Kollisionsobjekt, beispielsweise einem anderen Auto, entsteht, zu absorbieren, sondern dazu, Energie zu absorbieren, die im Kollisionsfall beim Aufprall eines Fahrzeuginsassen auf z. B. die Türinnenverkleidung entsteht.

Im Stand der Technik sind hierfür Schaumstoffklötze bekannt, die hinter der Türinnenverkleidung angeordnet werden. Derartige Schaumstoffklötze weisen eine konstante Dichteverteilung auf. Darüber hinaus nimmt die auf den Fahrzeuginsassen übertragene Kraft mit steigender Verformung des Schaumstoffklotzes immer weiter zu, weil dieser mit zunehmender Verformung immer weniger Energie absorbieren kann.

Ferner bestehen hinsichtlich der Sicherheitsanforderungen für Kraftfahrzeuge in verschiedenen Ländern unterschiedliche Richtlinien. In Europa basieren viele durchgeführte Tests auf der Euro-NCAP-Richtlinien (**Euro**pean **Ne**w **C**ar **A**ssessment **P**rogram), wohingegen in den Vereinigten Staaten von Amerika die IIHS-Richtlinie (**I**nsurance **I**nstitute for **H**ighway **S**afty) vermehrt herangezogen wird. Diese Richtlinien legen zum einen unterschiedliche maximale Kräfte fest, die auf die Fahrzeuginsassen wirken dürfen. Zum anderen unterscheiden sie sich auch dadurch, an welchen Positionen diese maximalen Kräfte wirken dürfen.

Ein Schaumstoffklotz, wie er im Stand der Technik bekannt ist, weist, wie bereits erwähnt, eine gleichmäßige Dichteverteilung auf. Er definiert daher an allen Positionen über seine Breite die gleiche maximale Kraft. Er kann die oben genannten Normen damit nicht ohne weiteres zugleich erfüllen. Daher werden oftmals für ein und dasselbe Fahrzeug für unterschiedliche Länder unterschiedliche Schaumstoffklötze eingesetzt, um den jeweiligen Normen gerecht zu werden.

Zum anderen wird von den Fahrzeugherstellern oftmals ein Zielkorridor für den Kraft-Weg-Verlauf von Interieurbauteilen, im Speziellen für Front-, Seiten- und Pfahlaufprall vorgegeben. Der Zielkorridor, der der vorliegenden Erfindung zu Grunde liegt, ist derart vorgegeben, dass zunächst mit der Verformung von Interieurbauteilen, z. B. einer Tür, mit einem Energieabsorber ein im wesentlichen linearer Anstieg der Kraft erfolgt, die dann ab einer bestimmten Verformung im wesentlichen konstant bleibt. Wie bereits erwähnt, nimmt bei den bekannten Schaumstoffklötzen die Kraft mit zunehmender Verformung (Weg) immer stärker zu, so dass die bekannten Schaumstoffklötze die Vorgaben der oben genannten Richtlinien, wie auch die der Fahrzeughersteller nicht erfüllen können.

Weiter sind aus dem Stand der Technik Energieabsorber bekannt, die kegelförmige oder pyramidenförmige Absorptionselemente umfassen, die sich beim Aufprall ineinander schieben, um die Energie zu absorbieren. Ein derartige Energieabsorber ist beispielsweise aus der DE 39 19 742 A1 bekannt. Obwohl diese Ausgestaltung gegenüber den bisher verwendeten Schaumstoffklötzen eine Verbesserung darstellt, besteht nach wie vor die Notwendigkeit für einen Energieabsorber, der die Möglichkeit schafft auf einfachste Art und Weise beide oben erwähnten Richtlinien sowie die Vorgaben der Fahrzeughersteller zu erfüllen.

Darüber hinaus sind aus der US-A-5,636,866 und der US-A-5,934,730 Kraftfahrzeuge mit einem Energieabsorber mit mehreren Rippen, die mehreckige Hohlkammern bilden, bekannt. Ein Kraftfahrzeug mit den Merkmalen im Oberbegriff von Anspruch 1 ist aus der WO-A-2005/113275 oder der EP-A-1 593 872 bekannt.

Dementsprechend beruht die Aufgabe der vorliegenden Erfindung darauf ein Kraftfahrzeug mit einem Energieabsorber der eingangs genannten Art zu schaffen, der die Möglichkeit schafft sowohl der Euro-NCAP-, als auch der IIHS-Richtlinie gerecht zu werden und zugleich einen Kraft-Weg-Verlauf mit zunächst linearem Anstieg und dann konstanten weiteren Verlauf zu ermöglichen.

Diese Aufgabe wird durch die Merkmale des Patentanspruchs 1 gelöst. Vorteilhafte Weiterbildungen der vorliegenden Erfindung sind in den abhängigen Patentansprüchen genannt.

Der Erfindung liegt der Gedanke zu Grunde den Energierabsorber einstückig aus Kunststoff, insbesondere als Spritzgussteil, auszugestalten und eine wabenähnliche Struktur zu schaffen, die auf einfachste Art und Weise modulierbar ist, um basierend auf dem gleichen erfinderischen Grundgedanken Energieabsorber zu schaffen, die zumindest zwei der oben genannten Richtlinien gerecht werden.

Dementsprechend schlägt die vorliegende Erfindung einen Energieabsorber zur Verwendung als Aufprallschutz in einem Kraftfahrzeug, z. B. im Bereich der Türen, vor, wobei der Energieabsorber als einstückiges Kunststoffbauteil, insbesondere Spritzgussteil, ausgebildet sein kann und mehrere Rippen umfasst, die zusammen mehreckige Hohlkammern bilden. Dieser im Grunde nach einfache Aufbau des Energieabsorbers bietet neben der einfachen und kostengünstigen Herstellbarkeit auch die Möglichkeit ihn, basierend auf dem gleichen erfinderischen Konzept an unterschiedlichste Gegebenheiten (z. B. unterschiedlichste Fahrzeugtypen) anzupassen und dennoch beiden oben genannten Richtlinien gerecht zu werden. Insbesondere kann durch Auswahl der Anzahl und Position der Quererstreckung (in Fahrzeug Y-Richtung) der Rippen sowie ggf. der entsprechenden Auswahl ihrer Wandstärke Einfluss auf das Energieabsorptionsverhalten genommen werden ohne den grundlegenden Aufbau (z. B. die Außenkontur) zu ändern. Auch können in unterschiedlichen Bereichen in Längs- oder Schrägerstreckung der Rippen unterschiedliche Energieabsorptionseigenschaften erzielt werden. Letzteres ist ggf. notwendig, wenn die unterschiedlichen Richtlinien oder Normen, die zu erfüllen sind an unterschiedlichen Positionen ein unterschiedliches Energieabsorptionsverhalten erfordern, welches nicht durch die verbleibenden Bestandteile der Interieurbauteile ausgleichbar ist. Hierzu kann auch die Festlegung der Werkzeugteilung des Spritzgusswerkzeuges, das zur Herstellung des erfindungsgemäßen Energieabsorbers dient, berücksichtigt werden bzw. auf diese Einfluss genommen werden. So können auf den beiden Seiten der Teilung unterschiedliche Ausgestaltungen gewählt werden. Darüber hinaus bietet die Aufteilung der Werkzeuge bezüglich den einzelnen Richtlinien weitere Vorteile, da es hierdurch möglich wird bei Änderungen der Vorschriften, Richtlinien oder Normen entsprechend flexibel reagieren zu können, da hierbei nur die entsprechende Werkzeughälfte erneuert bzw. angepasst werden muss. Darüber hinaus bietet die Ausgestaltung des Energieabsorbers als einstückiges Bauteil weitere Vorteile. Zum einen besteht eine große Freiheit hinsichtlich der Befestigung des Energieabsorbers. Hierbei sind ein Verkleben, Verschrauben oder Clipsverbindungen, etc. denkbar. Im Stand der Technik hingegen ist die Befestigung meist auf Verkleben oder Verschrauben beschränkt. Zum anderen besteht die Möglichkeit zusätzliche Elemente gleichzeitig und integral mit auszubilden. Nur beispielhaft seien hier Kabelfixierungen genannt, an denen Kabel befestigt werden können, die in der Tür verlaufen und beispielsweise der Kontaktierung mit einem Lautsprecher oder dem Fensterheber sowie anderen elektrischen Bauteilen dienen.

Gemäß einer vorteilhaften Ausführungsform der vorliegenden Erfindung sind die Hohlkammern im Querschnitt rechteckig. D. h. die Rippen umfassen Querrippen, die im Fahrzeug in Y-Richtung verlaufen und Längsrippen, die in Z-Richtung verlaufen, wobei die Längserstreckung der jeweiligen Rippen erfindungsgemäß in X-Richtung verläuft. Dies vereinfacht den Aufbau merklich und erleichtert es die Längsrippen in Z-Richtung knicksteif auszugestalten, so dass die Energieabsorption nahezu ausschließlich durch Anzahl und Positionierung sowie Ausgestaltung der Querrippen einstellbar ist. Mögliche Ausgestaltungen können hierbei konkave, konvexe, eckige oder anderweitige Formveränderungen sein, um einen Knick- bzw. Einknickbereiche vorzudefinieren.

Zu diesem Zweck ist es weiter bevorzugt, dass die Stärke bzw. die Wandstärke der Querrippen variierbar, vorzugsweise geringer ist als die der Längsrippen.

Wie es bereits erwähnt wurde, kann durch die vorteilhafte Ausgestaltung der vorliegenden Erfindung der Energieabsorber in X-Richtung in zwei Abschnitte unterteilt werden, wobei die Unterteilung durch die Werkzeugteilung vorgegeben wird. In den zwei Abschnitten kann einerseits die Anzahl und Positionierung der Rippen aber auch deren Wandstärke anders ausgestaltet werden. Dadurch können an unterschiedlichen Positionen unterschiedliche Energieabsorptionseigenschaften erzielt werden, was dazu beiträgt den Energieabsorber an die unterschiedlichen Normen oder Richtlinien, durch einfaches Wechseln der entsprechenden Werkzeughälfte anzupassen.

Hinsichtlich der Wandstärke der einzelnen Rippen ist es bevorzugt, diese in einem Bereich von 1,0 mm bis 3,0 mm auszugestalten.

In einer besonderen Ausführungsform des rechteckigen Querschnitts weisen die Querrippen eine Stärke im Bereich zwischen 1,0 mm und 2,0 mm, vorzugsweise 1,5 mm auf. Die Stärke der Längsrippen hingegen liegt in einem Bereich zwischen 2,0 mm und 3,0 mm, vorzugsweise bei 2,5 mm.

Als besonders bevorzugtes Material für den Energieabsorber hat sich PCABS (Polycarbonat Acryl-Butadien-Styrol) erwiesen. Es versteht sich jedoch im erfinderischen Sinne, dass auch anderen Materialien mit einer hohen Bruchdehnung wie z. B. ABS, Polypropylen oder entsprechende Metalle wie z. B. Aluminium, Magnesium und deren Legierungen Verwendung finden können. Unter Bruchdehnung wird hierbei der Materialkennwert aus dem gängigen Zugversuch ISO 527, EN 10002-1, -5 und ISO 6892 verstanden, der die Verformungsfestigkeit eines Werkstoffes, sprich seine Dehnungseigenschaft klassifiziert, bis der Werkstoff abreißt oder bricht. Erfindungsgemäß werden demnach Werkstoffe beansprucht, die eine Bruchdehnung höher als 10% aufweisen.

Darüber hinaus ergibt sich die Problematik, dass der Energieabsorber einerseits an die Vorgaben der Kraftfahrzeughersteller, d. h. den vorgegebenen Zielkorridor angepasst werden muss, andererseits aber in einer besonders bevorzugten Ausführungsform meist unmittelbar unter der Armauflage der Türverkleidung liegt. Bisher wurde im Stand der Technik die Armauflage stets durch separate Elemente versteift, um bei einer Kraftbeaufschlagung in Z-Richtung auf die Armauflage eine Verformung zu vermeiden. Dabei wurden meist in Y-Richtung verlaufende Querrippen an der Unterseite der Armauflage mit angeformt. Diese in Y verlaufenden Versteifungsrippen haben jedoch einen nachteiligen Einfluss auf die Energieabsorption bei einer Kraftbeaufschlagung in Z-Richtung. Da die Türinnenverkleidungen meist ebenfalls in einem Formwerkzeug ausgebildet werden, können jedoch keine in X-Richtung verlaufenden Verstärkungsrippen an der Armauflage vorgesehen werden, weil in unserem Beispiel die Tür- bzw. die Türinnenverkleidung sonst nicht entformbar wäre. Um diese Problematik zu lösen, schlägt die vorliegende Erfindung vor auf einer oder mehreren Rippen auf der im Einbauzustand des Energieabsorbers einer Armauflage zugewandten Seite des Energieabsorbers ein Stützelement zum Stützen der Armauflage vorzusehen. Dies gestattet es die bisher verwendeten Verstärkungsrippen auf der Unterseite der Armauflage wegzulassen und die Armauflage durch den derart ausgebildeten Energieabsorber zu stützen.

Dabei hat es sich in einer bevorzugten Ausführungsform als vorteilhaft herausgestellt, zwei Stützwände vorzusehen, die im Wesentlichen die gleiche Ausrichtung wie die Längsrippen aufweisen, wobei die Stärke der Stützwände gleich oder größer sein kann als die der Längsrippen. Mit anderen Worten verlaufen die Stützwände gleich wie die Längsrippen in Fahrzeug Y-Richtung und sind in Z-Richtung knicksteif ausgebildet. D. h. bei einer Kraftbeaufschlagung in Z-Richtung knicken die Stützwände nicht weg, so dass die Armauflage zuverlässig und sicher gestützt ist.

Um dies weiter zu stärken, sind die Stützwände an ihren der/den Querrippen abgewandten Enden über eine Verbindungswand integral verbunden.

Darüber hinaus können die Stützwände nur auf einer Seite der Werkzeugteilung vorgesehen sein, was es ermöglicht im Bereich der Werkzeugteilung, d. h. im Bereich, in dem der Energieabsorber in zwei Abschnitte unterteilt ist, die Stützwände sowie die Verbindungswand mit einer stärkeren Wandstärke auszugestalten als im verbleibenden Bereich ihrer Erstreckung in Y-Richtung. Dies bewirkt eine weitere Versteifung der Stützwände bzw. der Verbindungswand.

Wie es eingangs erwähnt wurde, wird von den Kraftfahrzeugherstellern ein Zielkorridor für den Kraft-Weg-Verlauf von Interieurbauteilen im Speziellen für Front-, Seiten-, Pfahlaufprall vorgegeben. Um in diesen Zielkorridor zu fallen, können in einer bevorzugten Ausgestaltung des Energieabsorbers die Querrippen in ihrer Anzahl und Positionierung sowie hinsichtlich ihrer Wandstärke derart konfiguriert, dass der Kraft-Weg-Verlauf zunächst einen linearen Anstieg bis zu einer vorbestimmten Kraft, vorzugsweise in einem Bereich zwischen 3000 und 4500 N, gestattet und dann über einen vorbestimmten Weg bei entsprechend dieser Kraft konstant verläuft.

Weitere Merkmale und Vorteile der vorliegenden Erfindung werden aus der folgenden Beschreibung einer bevorzugten Ausführungsform der vorliegenden Erfindung ersichtlich, die unter Bezugnahme auf die begleitenden Zeichnungen erfolgt.

In den Zeichnungen zeigen:
Fig. 1 eine schematische Ansicht einer Türinnenverkleidung mit dahinter angeordnetem Energieabsorber gemäß der vorliegenden Erfindung;
Fig. 2 eine perspektivische Ansicht eines erfindungsgemäßen Energieabsorbers; und
Fig. 3 den von den Kraftfahrzeugherstellern vorgegebenen Zielkorridor für den Kraft-Weg-Verlauf und einen beispielhaften Verlauf für die erfinderische Lösung.
Fig. 4 den von den Kraftfahrzeugherstellern vorgegebenen Zielkorridor für den Kraft-Weg-Verlauf eines aus dem Stand der Technik bekannten "Crash Pads".
Fig. 5 eine Seitenansicht, in der die Werkzeugteilung dargestellt wurde.

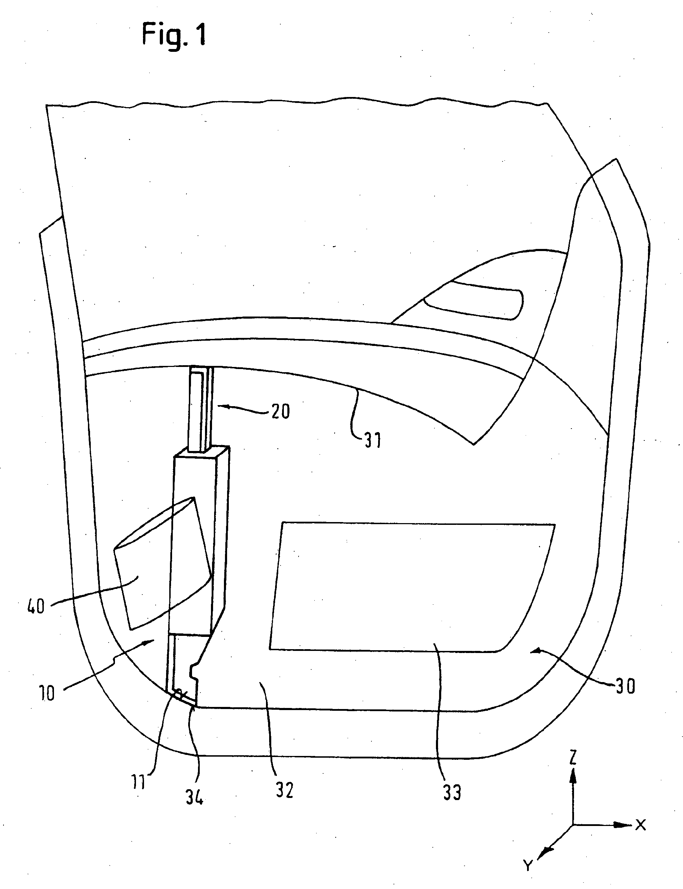

Fig. 1 zeigt schematisch einen Teil einer Türinnenverkleidung 30 eines Kraftfahrzeugs. Diese Türinnenverkleidung 30 weist eine Ausbuchtung 32 auf, die unter anderem eine Kartentasche 33 und eine im Wesentlichen horizontale Fläche 31 auf der die Armauflage (nicht dargestellt) positioniert wird, umfasst. Des Weiteren definiert die Ausbuchtung 32 entgegengesetzt der Fläche 31 für die Armauflage eine Unterkante 34.

Im Bereich dieser Ausbuchtung 32 wird der erfindungsgemäße Energieabsorber 10, der auch als "crash pad" bezeichnet werden kann, angeordnet. Dabei ist der Energieabsorber 10 in einem Bereich angeordnet, in dem gemäß den jeweiligen Sicherheitsrichtlinien (Euro NCAP und IIHS) erwartungsgemäß das Becken eines Fahrzeuginsassens bei einem Seitenaufprall auf die Türinnenverkleidung 30 treffen wird. Dieser Bereich ist in Fig. 1 mit der Bezugsziffer 40 gekennzeichnet.

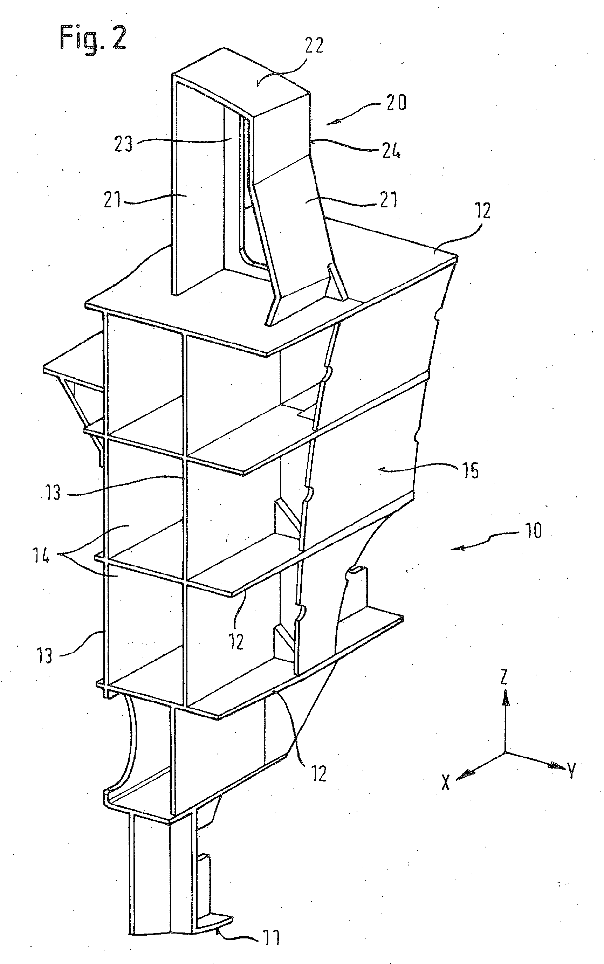

Im Folgenden wird unter Bezugnahme in Fig. 2 der Energieabsorber 10 einer Ausführungsform der vorliegenden Erfindung im Detail erläutert. Der Energieabsorber 10 der vorliegenden Ausführungsform ist bevorzugt aus PCABS (Polycarbonat Acryl-Butadien-Styrol) gebildet und bevorzugt in einem Spritzgießverfahren hergestellt. Er umfasst mehrere Querrippen 12 sowie mehrere Längsrippen 13. Diese Querrippen 12 und Längsrippen 13 ergänzen sich zusammen zu einem Profil, das mehrere Hohlkammern 14 umfasst. Diese sind im Querschnitt, d. h. senkrecht zu den Querrippen 12 und den Längsrippen 13, mehreckig, vorzugszweise rechteckig ausgebildet.

Darüber hinaus ist auf der obersten Querrippe 12, d. h. der Querrippe 12, die im verbauten Zustand in Fig. 1 der Fläche 31 für die Armauflage zugewandt ist, ein Stützelement 20 vorgesehen, das zwei Stützwände 21 sowie eine Verbindungswand 22 umfasst, die die Enden der Stützwände 21 miteinander verbindet, die den Enden, die mit der Querrippe 12 verbunden sind, entgegengesetzt angeordnet sind. Die in Fig. 2 rechter Hand dargestellte Stützwand 21 erstreckt sich gleichermaßen wie die linker Hand dargestellte Stützwand 21 im Wesentlichen in der gleichen Richtung wie die Längsrippen 13. Jedoch kann die rechter Hand dargestellte Stützwand 21 vorzugsweise einen Knick aufweisen, so dass sich diese Stützwand aus drei Abschnitten zusammensetzt. Einem ersten Abschnitt parallel zu den Längsrippen 13 und in einem ersten Abstand zu der linker Hand dargestellten Stützwand 21, einem dritten Abschnitt ebenfalls parallel zu den Längsrippen 13 jedoch in einem zweiten kleineren Abstand zu der linker Hand dargestellten Stützwand 21 und einem zweiten Abschnitt, der die beiden Abschnitte verbindet. Ferner weist dieses Stützelement 20 an einer Seite stirnseitig eine entlang der Stützwand 21 und der Verbindungswand 22 verlaufende Verstärkungsrippe 23 auf. Diese ist im Bereich einer Werkzeugteilung vorgesehen, d. h. sie schließt mit der Werkzeugteilung des Werkzeugs für den Energieabsorber 10 ab, so dass das Bauteil nach dem Formen entformt werden kann. Bei der in Fig. 2 dargestellten Ausführungsform verläuft die Werkzeugteilung entlang der rechter Hand dargestellten Stirnseite 24 des Stützelements 20 in Z-Richtung.

Um in Z-Richtung auf das Stützelement 20 aufgebrachte Kräfte ableiten zu können, stützt sich der Energieabsorber 10 ferner über eine Aufstandsfläche 11 an der Unterkante 34 der Innenverkleidung 30 ab, so dass Kräfte, die auf die Armauflage ausgeübt werden, über das Stützelement 20 und die Längsrippen 13 sowie die Aufstandsfläche 11 abgeleitet werden. Hierzu sind die Stützwände 21 ferner in X-Richtung knicksteif ausgebildet, was gleichermaßen für die Längsrippen 13 gilt.

Der Energieabsorber 10 liegt des Weiteren mit seiner in Fig. 2 nach vorne gerichteten Stirnseite 15 an der Innenfläche der Ausbuchtung 32 der Türinnenverkleidung 30 an und ist über diese Fläche damit verklebt. Auf der entgegengesetzten Seite liegt der Energieabsorber 10 vorzugsweise am Türrohbau an, so dass bei einem Aufprall eines Fahrzeuginsassens bzw. dessen Beckens im Bereich 40 auf die Türinnenverkleidung 30 eine Deformation des Energieabsorbers 10 möglich ist, um die Energie zu absorbieren.

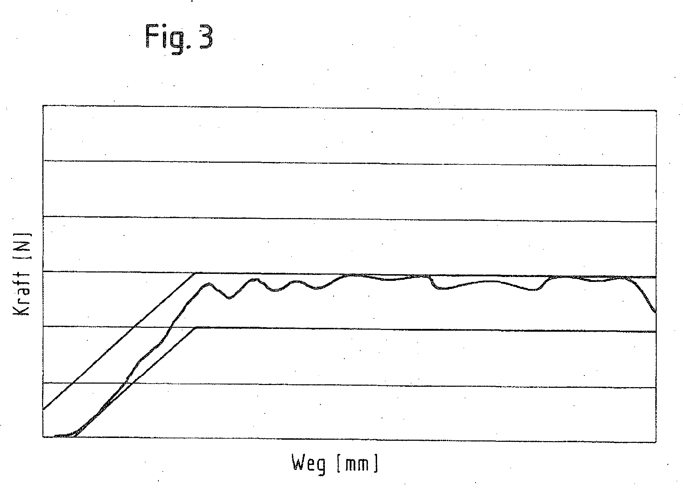

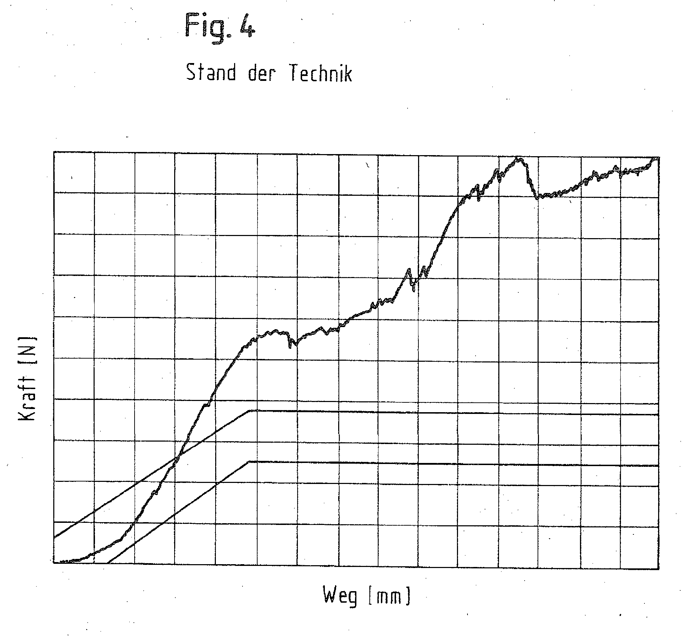

Der erfindungsgemäße Energieabsorber 10 erfüllt dabei die Anforderungen der Kraftfahrzeughersteller, indem er in einen vorgegebenen Zielkorridor eines Kraft-Weg-Verlaufs bzw. einer Kraf-Weg-Kurve fällt. Dieser Zielkorridor ist in Fig. 3 beispielhaft dargestellt. So wird gefordert, dass dabei einem Seitenaufprall, bei dem das Becken im Bereich 40 eines Fahrzeuginsassen auf die Türinnenverkleidung 30 trifft, die Kraft auf das Becken zunächst linear oder im Wesentlichen linear ansteigt, wobei die Kraft bis zu maximal 3000 N und minimal 2000 N ansteigen soll. In diesem Maximalbereich soll auch bei weiterem Eindrücken ein konstanter Kraftverlauf erzielt werden. Der Zielkorridor in Fig. 4 entspricht mit äquivalenten Vorgaben dem Stand der Technik. Hieraus ist ersichtlich, dass die vormals verwendeten Energieabsorber 10 nicht in den Zielkorridor kommen können.

Dies wird durch den erfindungsgemäßen Energieabsorber 10 erzielt. Trifft ein Becken im Bereich 40 auf die Türinnenverkleidung 30, so steigt die auf das Becken übertragene Kraft zunächst linear an. Wird eine gewisse Kraft auf den Energieabsorber 10 erreicht (im Bereich zwischen 2000 und 3000 N), knicken eine oder mehrere der Querrippen 12 weg und die zugehörigen Längsrippen 13 bewegen sich aufeinander zu. Dadurch wird erzielt, dass die Kraft auf einem konstanten Niveau oder im Wesentlichen konstanten Niveau gehalten wird.

Die in Fig. 1 dargestellte Position des Beckens im Bereich 40 ist die Position gemäß der Euro-NCAP-Richtlinie. Wird die IIHS-Richtlinie angewandt, so verschiebt sich die Position des Beckenbereichs. Um beide Richtlinien gleichzeitig erfüllen zu können, kann es daher erforderlich sein den Energieabsorber 10 in Y-Richtung und Z-Richtung mit unterschiedlichen Eigenschaften hinsichtlich des Energieabsorptionsverhaltens auszugestalten. Sollte dies notwendig sein, so ermöglicht die vorliegende Erfindung eine optimale Anpassung durch bloße Auswahl der Position, Anzahl und ggf. Stärke der Rippen 12. Auch ist es möglich den Energieabsorber 10 in Y-Richtung in zwei unterschiedliche Abschnitte zu unterteilen, wobei die Unterteilung durch die Werkzeugteilung vorgegeben wird. D. h. man kann die Teilungslinie (in Z-Richtung) der beiden Werkzeughälften bei der Herstellung derart festlegen (in Y-Richtung verschieben), dass auf beiden Seiten dieser Teilung eine unterschiedliche Positionierung, Anzahl und ggf. Stärke der Rippen 12 vorliegt.

Somit schafft die vorliegende Erfindung auf einfachste Art und Weise ein modulares Konzept, auf dessen Grundlage in einem Fahrzeug sowohl die Euro-NCAP-Richtlinie als auch die IIHC-Richtlinie erfüllt werden können. Darüber hinaus ist der Energieabsorber 10 einfach und kostengünstig herstellbar und bringt den weiteren Vorteil, dass zusätzliche Elemente, wie unter anderem das Stützelement 20, aber auch z. B. Kabelfixierungen zum Fixieren von elektrischen Leitungen in der Türinnenverkleidung 30 integral mit vorgesehen werden können. Darüber hinaus ist das Konzept leicht an die entsprechend zur Verfügung stehenden Bauräume anpassbar und hinsichtlich seiner Befestigung an der Türinnenverkleidung 30 sehr flexibel. So kann der Energieabsorber 10 über seine Stirnseite 15 mit der Türinnenverkleidung 30 verklebt werden Alternativ sind aber auch Schraub- oder Clipsverbindungen oder andere Verbindungsarten denkbar. Je nach Anforderung kann daher die Befestigungsart entsprechend gewählt werden.

Darüber hinaus vereinbart der Energieabsorber 10 gemäß der vorliegenden Erfindung die konträren Anforderungen eines Systems, das bei einem Seitenaufprall entsprechend des vorgegebenen Zielkorridors kollabiert und andererseits senkrecht zu der normalerweise bei einem Seitenaufprall durch das Becken im Bereich 40 auftretenden Kraft steif ausgebildet ist, um eine Unterstützung der Armauflage zu gewährleisten.

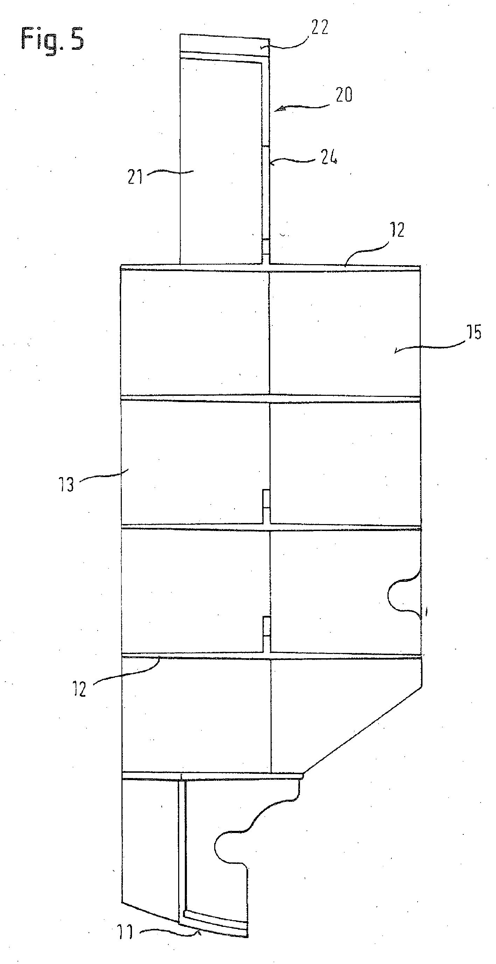

Ferner wird aus Fig. 5 ersichtlich, dass bei Änderungen der Normen, Richtlinien oder anderweitigen Vorschriften nur ein Teilbereich des Energieabsorbers 10 derart abgeändert worden muss, dass lediglich eine Werkzeughälfte anzupassen oder zu erneuern ist, um entsprechend veränderten Anforderungen gerecht zu werden.

Wie es aus der obigen Beschreibung ersichtlich wurde, ist das erfindungsgemäße Konzept gegenüber dem bekannten Stand der Technik sehr flexibel und multifunktional einsetzbar und verbessert den bisher bekannten Stand der Technik daher erheblich.

## Patentansprüche

1. Kraftfahrzeug mit einem Energieabsorber als Aufprallschutz im Bereich der Türen, wobei der Energieabsorber (10) mehrere Querrippen (12) und mehrere Längsrippen (13) umfasst, die miteinander integral verbunden sind und mehrere im Querschnitt mehreckige Hohlkammer (14) bilden, wobei die Rippen jeweils eine Längserstreckung in Fahrzeuglängsrichtung (X-Richtung) aufweisen, **dadurch gekennzeichnet, dass** auf einer oder mehreren Querrippen (12) auf der einer Armauflage zugewandten Seite des Energieabsorbers (10) ein Stützelement (20) zum Stützen einer Armauflage vorgesehen ist.

2. Kraftfahrzeug nach Anspruch 1, bei dem der Querschnitt der Hohlkammer (14) rechteckig ist.

3. Kraftfahrzeug nach Anspruch 1 oder 2, bei dem die Rippen (12, 13) im Querschnitt linear, konkav, konvex oder eckig verlaufen.

4. Kraftfahrzeug nach einem der vorstehenden Ansprüche, bei dem die Wandstärke der Rippen (12, 13) gleich ist.

5. Kraftfahrzeug nach Anspruch 4, bei dem die Wandstärke der Rippen (12, 13) in einem Bereich zwischen 1,0 mm und 3,0 mm liegt.

6. Kraftfahrzeug nach einem der vorstehenden Ansprüche, bei dem die Wandstärke der Querrippen (12) geringer ist als die der Längsrippen (13).

7. Kraftfahrzeug nach Anspruch 6, bei dem die Wandstärke der Querrippen (12) in einem Bereich zwischen 1,0 mm und 2,0 mm liegt und vorzugsweise 1,5 mm beträgt.

8. Kraftfahrzeug nach Ansprüche 6 oder 7, bei dem die Wandstärke der Längsrippen (13) in einem Bereich zwischen 2,0 mm und 3,0 mm liegt und vorzugsweise 2,5 mm beträgt.

9. Kraftfahrzeug nach einem der Ansprüche 6-8, bei dem die Querrippen (12) in ihrer Längserstreckung in zwei Abschnitte unterteilt sind in denen die Stärke unterschiedlich ist.

10. Kraftfahrzeug nach einem der vorstehenden Ansprüche, bei dem das Stützelement (20) zwei Stützwände (21) in im Wesentlichen der gleichen Ausrichtung wie die Längsrippen (13) aufweist, wobei die Wandstärke der Stützwände (21) gleich oder Größer ist als die der Längsrippen (13).

11. Kraftfahrzeug nach Anspruch 10, bei dem die Stützwände (21) an ihren der/den Querrippe/-n (12) abgewandeten Enden über eine Verbindungswand (22) verbunden sind.

12. Kraftfahrzeug nach einem der vorstehenden Ansprüche, der aus einem Material mit einer Bruchdehnung von mindestens 10% besteht.

13. Kraftfahrzeug nach einem der vorstehenden Ansprüche, wobei Befestigungselemente integral mit aus- oder angeformt sind.

14. Kraftfahrzeug nach einem der vorstehenden Ansprüche, bei dem der Energieabsorber derart ausgelegt ist, dass der Kraft-Weg-Verlauf zunächst einen linearen Anstieg aufweist und dann über einen vorbestimmten Weg konstant verläuft.

## Claims

1. Motor vehicle with an energy absorber as collision protection in the region of the doors, wherein the energy absorber (10) comprises a plurality of transverse ribs (12) and a plurality of longitudinal ribs (13), which are connected integrally to one another and form a plurality of hollow chambers (14) which are polygonal in cross section, wherein the ribs each have a longitudinal extent in the longitudinal direction of the vehicle (X direction), **characterized in that** a supporting element (20) for supporting an arm rest is provided on one or more transverse ribs (12) on that side of the energy absorber (10) which faces an arm rest.

2. Motor vehicle according to Claim 1, in which the cross section of the hollow chambers (14) is rectangular.

3. Motor vehicle according to Claim 1 or 2, in which the ribs (12, 13) have a linear, concave, convex or angular profile in cross section.

4. Motor vehicle according to one of the preceding claims, in which the wall thickness of the ribs (12, 13) is identical.

5. Motor vehicle according to Claim 4, in which the wall thickness of the ribs (12, 13) lies within a range of between 1.0 mm and 3.0 mm.

6. Motor vehicle according to one of the preceding claims, in which the wall thickness of the transverse ribs (12) is less than that of the longitudinal ribs (13).

7. Motor vehicle according to Claim 6, in which the wall thickness of the transverse ribs (12) lies within a range of between 1.0 mm and 2.0 mm and is preferably 1.5 mm.

8. Motor vehicle according to Claim 6 or 7, in which the wall thickness of the longitudinal ribs (13) lies within a range of between 2.0 mm and 3.0 mm and is preferably 2.5 mm.

9. Motor vehicle according to one of Claims 6-8, in which the transverse ribs (12) are divided in the longitudinal extent thereof into two portions, in which the thickness differs.

10. Motor vehicle according to one of the preceding claims, in which the supporting element (20) has two supporting walls (21) in substantially the same orientation as the longitudinal ribs (13), wherein the wall thickness of the supporting walls (21) is identical to or larger than that of the longitudinal ribs (13).

11. Motor vehicle according to Claim 10, in which the supporting walls (21) are connected at the ends thereof facing away from the transverse rib(s) (12) via a connecting wall (22).

12. Motor vehicle according to one of the preceding claims, said motor vehicle being composed of a material with a failure strain of at least 10%.

13. Motor vehicle according to one of the preceding claims, wherein fastening elements are formed integrally therewith or thereon.

14. Motor vehicle according to one of the preceding claims, in which the energy absorber is designed in such a manner that the force/displacement profile first of all has a linear rise and then runs constantly over a predetermined distance.

## Revendications

1. Véhicule automobile comprenant un absorbeur d'énergie en tant que protection contre les chocs dans la région des portes, l'absorbeur d'énergie (10) comprenant plusieurs nervures transversales (12) et plusieurs nervures longitudinales (13) qui sont connectées intégralement les unes avec les autres et qui forment plusieurs chambres creuses (14) de section transversale polygonale, les nervures présentant à chaque fois une étendue longitudinale dans la direction longitudinale du véhicule (direction X), **caractérisé en ce que** sur une ou plusieurs nervures transversales (12) du côté de l'absorbeur d'énergie (10) tourné vers un accoudoir est prévu un élément de support (20) pour supporter un accoudoir.

2. Véhicule automobile selon la revendication 1, dans lequel la section transversale de la chambre creuse (14) est rectangulaire.

3. Véhicule automobile selon la revendication 1 ou 2, dans lequel les nervures (12, 13) s'étendent en section transversale linéairement, sous forme concave, convexe ou angulaire.

4. Véhicule automobile selon l'une quelconque des revendications précédentes, dans lequel l'épaisseur de paroi des nervures (12, 13) est identique.

5. Véhicule automobile selon la revendication 4, dans lequel l'épaisseur de paroi des nervures (12, 13) est comprise dans une plage entre 1,0 mm et 3,0 mm.

6. Véhicule automobile selon l'une quelconque des revendications précédentes, dans lequel l'épaisseur de paroi des nervures transversales (12) est inférieure à celle des nervures longitudinales (13).

7. Véhicule automobile selon la revendication 6, dans lequel l'épaisseur de paroi des nervures transversales (12) est comprise dans une plage entre 1,0 mm et 2,0 mm et vaut de préférence 1,5 mm.

8. Véhicule automobile selon la revendication 6 ou 7, dans lequel l'épaisseur de paroi des nervures longitudinales (13) est comprise dans une plage entre 2,0 mm et 3,0 mm et vaut de préférence 2,5 mm.

9. Véhicule automobile selon l'une quelconque des revendications 6 à 8, dans lequel les nervures transversales (12) sont divisées dans leur étendue longitudinale en deux portions dans lesquelles l'épaisseur est différente.

10. Véhicule automobile selon l'une quelconque des revendications précédentes, dans lequel l'élément de support (20) présente deux parois de support (21) essentiellement dans la même orientation que les nervures longitudinales (13), l'épaisseur de paroi des parois de support (21) étant supérieure ou égale à celle des nervures longitudinales (13).

11. Véhicule automobile selon la revendication 10, dans lequel les parois de support (21) sont connectées au niveau de leurs extrémités opposées à la ou aux nervures transversales (12) par le biais d'une paroi de connexion (22).

12. Véhicule automobile selon l'une quelconque des revendications précédentes, qui se compose d'un matériau ayant un allongement à la rupture d'au moins 10 %.

13. Véhicule automobile selon l'une quelconque des revendications précédentes, dans lequel des éléments de fixation sont formés ou façonnés intégralement.

14. Véhicule automobile selon l'une quelconque des revendications précédentes, dans lequel l'absorbeur d'énergie est conçu de telle sorte que la courbe force-déplacement présente tout d'abord une pente linéaire et s'étende ensuite de manière constante sur une distance prédéterminée.
